# EUROPEAN PATENT APPLICATION

(11) **EP 4 717 474 A1**
(43) Date of publication of application: **01.04.2026**
(21) Application number: 25201615.9
(22) Date of filing: 11.09.2025
(51) Int. Cl.: B60G 1/00, F16C 19/18, F16C 19/50

(54) **BEARING DEVICE FOR VEHICLE WHEEL**

(30) Priority: 27.09.2024 JP 2024169529
(71) Applicant: NTN Corporation, Osaka-shi Osaka 530-0005 (JP)
(72) Inventor: Sakurai, Ryou, Iwata-shi, Shizuoka, 438-8510 (JP)
(74) Representative: Grünecker Patent- und Rechtsanwälte PartG mbB

(57) **Abstract**

Provided is a bearing device for a vehicle wheel (1) capable of increasing a pitch circle diameter of a rolling element on an outer side to improve mechanical characteristics such as camber rigidity of the bearing device for a vehicle wheel (1) without impairing maintainability of a vehicle.

The bearing device for a vehicle wheel (1) includes an outer ring (2), a hub ring (3), an inner member including an inner ring (4) fitted to the hub ring (3) on an inner side of an inner raceway surface (3c), an outer side ball row (6), and an inner side ball row (5). A wheel mounting flange (3b) includes a tap hole (3e) into which a wheel bolt (3f) is inserted from the outer side. A pitch circle diameter of the outer side ball row (6) is larger than a pitch circle diameter of the inner side ball row (5). A thickness (Ha) of the wheel mounting flange (3b) forming the tap hole (3e) is 1.02 times or more and less than 1.3 times a nominal diameter (R) of the wheel bolt (3f) to be inserted.

## Description

### Technical Field

The present invention relates to a bearing device for a vehicle wheel.

### Background Art

Conventionally, a bearing device for a vehicle wheel that rotatably supports the wheel in a suspension device of a vehicle such as an automobile is known.

In recent years, in a vehicle in which a bearing device for a vehicle wheel is used, fuel regulation has been imposed from a social background such as energy saving and decarbonization, and the trend of electrification has progressed. In an electric automobile which is expected to be widely used in the future and whose main power source is an in-vehicle battery, the vehicle weight tends to increase as compared with a gasoline vehicle, and the axle load tends to increase.

In general, when the axle load increases, the rotational torque of the bearing device for a vehicle wheel increases, and it is necessary to increase the size of the bearing device for a vehicle wheel from the viewpoint of durability and strength. For example, in a bearing device for a vehicle wheel used in an electric automobile, there is a trend towards a narrower width and a larger diameter, with an outer diameter at an axial end portion of an outer ring becoming larger than an axial distance between a flange surface of a wheel mounting flange in a hub ring and an axial end surface of an inner ring fitted to the hub ring, and a weight of the bearing device for a vehicle wheel increases compared to a bearing device for a vehicle wheel used in a gasoline vehicle. Therefore, in a bearing device for a vehicle wheel used in an electric automobile, it is required to reduce torque and weight.

For example, as disclosed in Patent Literature 1, fixing with a hub bolt is known in which the hub bolt is press-fitted into a wheel mounting flange provided on a hub ring to fasten a wheel with a nut on a wheel side. Furthermore, in the bearing device for a vehicle wheel, when a pitch circle diameter (P.C.D.) of a rolling element on an outer side is formed to be larger than a pitch circle diameter (P.C.D.) of a rolling element on an inner side, the camber rigidity is increased, so that the steering stability of the vehicle is improved.

Such a configuration improves durability of the bearing device for a vehicle wheel while improving mechanical characteristics such as camber rigidity. However, in the fixing with the hub bolt shown in Patent Literature 1, since the hub bolt is press-fitted into the wheel mounting flange, in a case where maintenance of the vehicle is performed, it is necessary to set a space so that the hub bolt can be pulled out toward a vehicle body side, and the pitch circle diameter (P.C.D.) of the rolling element on the outer side, which is one side in the axial direction, cannot be sufficiently increased. When the pitch circle diameter (P.C.D.) of the rolling element on the outer side is too large, an outer diameter of the outer ring overlaps in a radial direction when the hub bolt is pulled out, so that there is a possibility that the hub bolt cannot be pulled out. Furthermore, in a case where a bolt screw portion of the hub bolt is crushed, the wheel cannot be removed from the vehicle body side.

### Citation List

### Patent Literature

Patent Literature 1: JP-A 2008-155837 Gazette

### Summary of Invention

### Technical Problem

Therefore, the present invention has been made in view of the above circumstances, and it is an object of the present invention to provide a bearing device for a vehicle wheel capable of improving mechanical characteristics such as camber rigidity of the bearing device for a vehicle wheel by enlarging a pitch circle diameter (P.C.D.) of a rolling element on an outer side without impairing maintainability of a vehicle.

### Solution to Problem

That is, a bearing device for a vehicle wheel includes: an outer member including a first outer raceway surface formed on one side in an axial direction and a second outer raceway surface formed on the other side in the axial direction with respect to the first outer raceway surface; an inner member including a hub ring that includes a wheel mounting flange for mounting a wheel on one side in the axial direction with respect to the outer member and in which a first inner raceway surface facing the first outer raceway surface is formed, and an inner ring that is fitted to the hub ring on the other side in the axial direction with respect to the first inner raceway surface and in which a second inner raceway surface facing the second outer raceway surface is formed; a first rolling element rollably accommodated between the first outer raceway surface and the first inner raceway surface; and a second rolling element rollably accommodated between the second outer raceway surface and the second inner raceway surface, in which the wheel mounting flange includes a tap hole into which a bolt is inserted from the one side in the axial direction, a pitch circle diameter of the first rolling element is larger than a pitch circle diameter of the second rolling element, and a thickness of the wheel mounting flange forming the tap hole is 1.02 times or more and less than 1.3 times a nominal diameter of the bolt to be inserted.

### Advantageous Effects of Invention

According to the present invention, it is possible to enlarge the pitch circle diameter (P.C.D.) of the rolling element on the outer side to improve the mechanical characteristics such as camber rigidity of the bearing device for a vehicle wheel without impairing the maintainability of a vehicle.

### Brief Description of Drawings

FIG. 1 is a side cross-sectional view illustrating a bearing device for a vehicle wheel according to the present embodiment;
FIG. 2 is a view illustrating the bearing device for a vehicle wheel according to the present embodiment as viewed from an inner side;
FIG. 3 is an enlarged view of a main part of the bearing device for a vehicle wheel according to the present embodiment;
FIG. 4 is an enlarged view of a main part of a conventional bearing device for a vehicle wheel;
FIG. 5 is an enlarged view of a main part of the conventional bearing device for a vehicle wheel; and
FIG. 6 is an enlarged view of a main part of the conventional bearing device for a vehicle wheel.

### Description of Embodiments

Hereinafter, modes for carrying out the present invention will be described with reference to the accompanying drawings.

### [Bearing device for wheel]

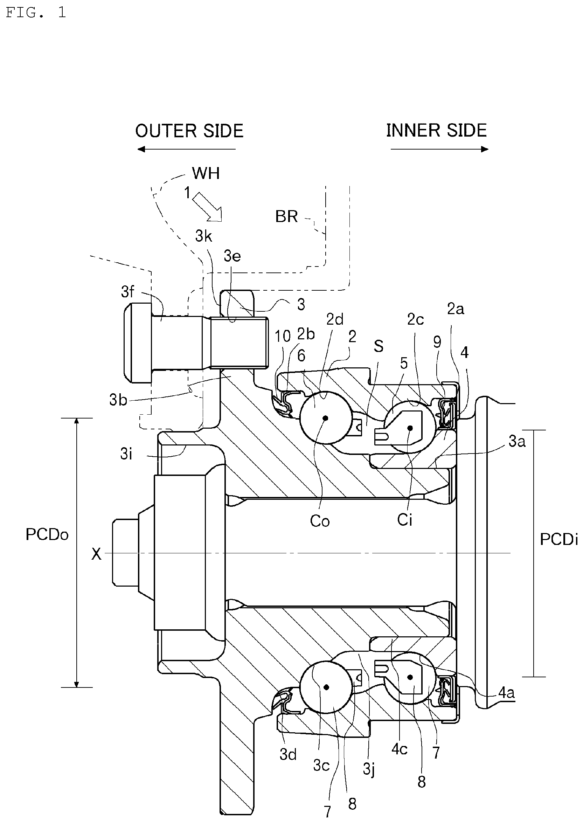

A bearing device for a vehicle wheel 1 illustrated in FIG. 1 is an embodiment of a bearing device for a vehicle wheel according to the present invention, and rotatably supports a wheel in a suspension device of a vehicle such as an automobile.

In the following description, an axial direction represents a direction along a rotation axis X of the bearing device for a vehicle wheel 1. A radial direction represents a direction perpendicular to the rotation axis X. Furthermore, an outer side represents one end side in the axial direction and a wheel side of the bearing device for a vehicle wheel 1 when the bearing device is mounted to a vehicle body, and an inner side represents the other end side in the axial direction and a vehicle body side of the bearing device for a vehicle wheel 1 when the bearing device is mounted to the vehicle body.

The bearing device for a vehicle wheel 1 has a configuration called a third generation, and includes an outer ring 2 that is an outer member, a hub ring 3 and an inner ring 4 that are an inner member, two rows of an inner side ball row 5 and an outer side ball row 6 that are rolling rows, and an inner side seal member 9 and an outer side seal member 10.

An inner side opening portion 2a into which the inner side seal member 9 can be fitted is formed at an inner side end portion of the outer ring 2. An outer side opening portion 2b into which the outer side seal member 10 can be fitted is formed at an outer side end portion of the outer ring 2.

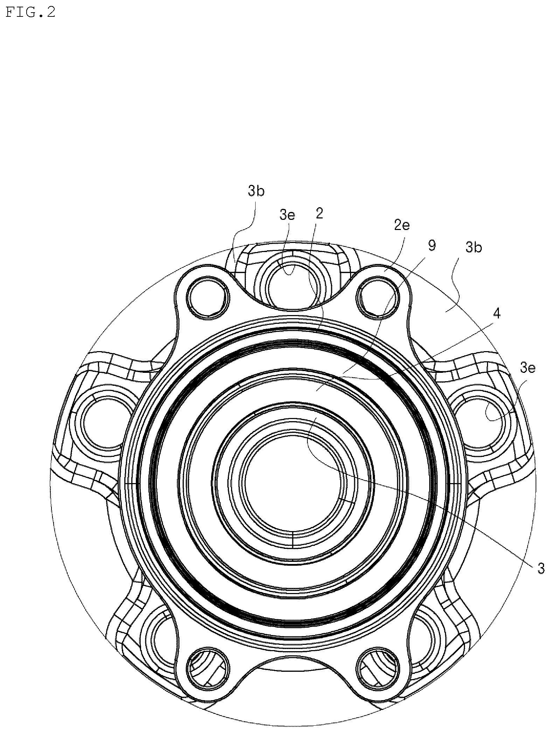

An outer raceway surface 2c on the inner side and an outer raceway surface 2d on the outer side are formed on an inner peripheral surface of the outer ring 2. The outer raceway surface 2d on the outer side is an example of a first outer raceway surface, and the outer raceway surface 2c on the inner side is an example of a second outer raceway surface. A vehicle body mounting flange 2e (see FIG. 2) for mounting the outer ring 2 to a vehicle body side member is integrally formed on an outer peripheral surface of the outer ring 2.

A small diameter step portion 3a having a smaller diameter than an outer side end portion is formed at an inner side end portion of an outer peripheral surface 3j of the hub ring 3. A wheel mounting flange 3b for mounting a wheel is integrally formed at the outer side end portion of the hub ring 3.

A plurality of tap holes 3e into which the wheel bolts 3f are inserted is formed in the wheel mounting flange 3b. A female screw screwed with the wheel bolt 3f for fastening a wheel WH and a brake rotor BR to the hub ring 3 is formed on an inner peripheral surface of the tap hole 3e. The wheel mounting flange 3b includes a flange surface 3k facing the outer side. The hub ring 3 includes a through hole 3i penetrating in the axial direction, and a constant velocity universal joint can be fitted in the through hole 3i so as to be rotatable integrally with the hub ring 3.

An inner raceway surface 3c on the outer side is provided on the outer peripheral surface 3j of the hub ring 3 so as to face the outer raceway surface 2d on the outer side of the outer ring 2. That is, on the outer side of the inner member, the inner raceway surface 3c is formed by the hub ring 3. The inner raceway surface 3c of the hub ring 3 is an example of a first inner raceway surface. In the hub ring 3, a lip sliding surface 3d on which the outer side seal member 10 is in sliding contact is formed on a base side of the wheel mounting flange 3b.

The inner side seal member 9 is fitted to an inner side opening end of an annular space S formed by the outer ring 2 and the hub ring 3, and closes the inner side opening end. The outer side seal member 10 is fitted to an outer side opening end of the annular space S formed by the outer ring 2 and the hub ring 3, and closes the outer side opening end.

The inner ring 4 is provided on the small diameter step portion 3a of the hub ring 3. The inner ring 4 is fixed to the small diameter step portion 3a of the hub ring 3 by press fitting. The inner ring 4 applies preload to the inner side ball row 5 and the outer side ball row 6 which are rolling rows. The inner ring 4 fitted to the small diameter step portion 3a of the hub ring 3 includes a fitting surface 4c with respect to the hub ring 3, and the fitting surface 4c is an inner peripheral surface of the inner ring 4.

An inner raceway surface 4a on the inner side is provided on an outer peripheral surface of the inner ring 4 so as to face the outer raceway surface 2c on the inner side of the outer ring 2. That is, the inner ring 4 forms the inner raceway surface 4a on the inner side of the inner member. The inner raceway surface 4a of the inner ring 4 is an example of a second inner raceway surface.

The inner side ball row 5 and the outer side ball row 6, which are rolling rows, are configured by holding a plurality of balls 7, which are a rolling element, by a holder 8. The inner side ball row 5 is rollably sandwiched between the inner raceway surface 4a of the inner ring 4 and the outer raceway surface 2c on the inner side of the outer ring 2. The outer side ball row 6 is rollably sandwiched between the inner raceway surface 3c of the hub ring 3 and the outer raceway surface 2d on the outer side of the outer ring 2.

That is, the inner side ball row 5 and the outer side ball row 6 are rollably accommodated between the raceway surfaces of the outer member and the inner member. The balls 7 in the outer side ball row 6 are an example of a first rolling element, and the balls 7 in the inner side ball row 5 are an example of a second rolling element.

In the bearing device for a vehicle wheel 1, the outer ring 2, the hub ring 3 and the inner ring 4, the inner side ball row 5, and the outer side ball row 6 constitute a double-row angular ball bearing. Note that the bearing device for a vehicle wheel 1 may constitute a double-row tapered roller bearing instead of the double-row angular ball bearing.

### [Relationship between dimensions of each part in bearing device for wheel]

As illustrated in FIG. 1, a pitch circle diameter of the balls 7 constituting the inner side ball row 5 is PCDi, and a pitch circle diameter of the balls 7 constituting the outer side ball row 6 is PCDo. The pitch circle diameter PCDi of the inner side ball row 5 is a diameter of a circle centered on the rotation axis X and passing through a center Ci of the balls 7 in the inner side ball row 5. The pitch circle diameter PCDo of the outer side ball row 6 is a diameter of a circle centered on the rotation axis X and passing through a center Co of the balls 7 in the outer side ball row 6.

The pitch circle diameter PCDo of the outer side ball row 6 and the pitch circle diameter PCDi of the inner side ball row 5 satisfy a relationship of PCDo > PCDi. That is, the pitch circle diameter PCDo of the outer side ball row 6 is formed to be larger than the pitch circle diameter PCDi of the inner side ball row 5.

As described above, in the bearing device for a vehicle wheel 1, the pitch circle diameter PCDo of the outer side ball row 6 is formed to be larger than the pitch circle diameter PCDi of the inner side ball row 5, so that the camber rigidity is increased while the torque and the weight that are the environmental performance are reduced, and thus the steering stability of the vehicle is improved. The camber rigidity is a coefficient indicating the rigidity in a lateral direction of the wheel with respect to a camber angle when an inclination (camber angle) of the wheel is small. Specifically, the camber rigidity is a proportional coefficient when a lateral force (camber thrust) generated when the wheel is inclined is proportional to the camber angle.

As the camber rigidity is increased, strong camber thrust can be generated, and traveling stability and cornering performance of the vehicle are improved. That is, by generating strong camber thrust, a course is not disturbed by disturbance such as unevenness of a road surface or cross wind, and the traveling stability is improved. Furthermore, by generating strong camber thrust, responsiveness when the wheel is tilted by a handle can be improved, and cornering performance is improved.

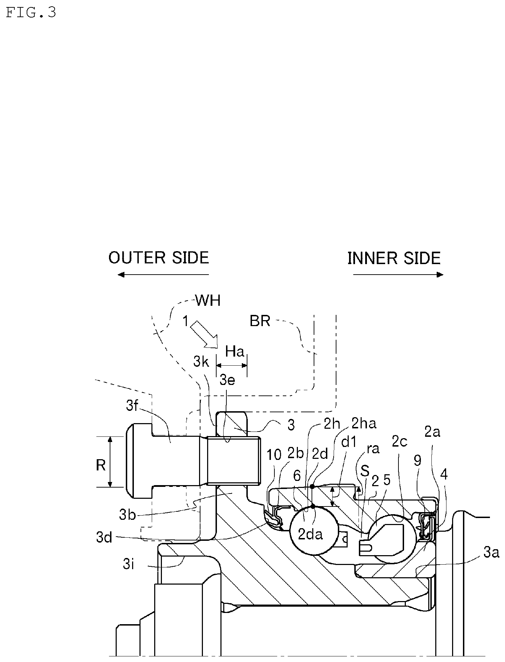

As illustrated in FIG. 3, a thickness of the wheel mounting flange 3b forming the tap hole 3e is Ha. The thickness Ha of the wheel mounting flange 3b forming the tap hole 3e is a length from the inner side opening end to the outer side opening end of the tap hole 3e. The thickness Ha of the wheel mounting flange 3b forming the tap hole 3e is preferably 1.02 times or more and less than 1.3 times a nominal diameter R of the wheel bolt 3f to be inserted. The nominal diameter R of the wheel bolt 3f is a dimension representing an outer diameter of a threaded portion of the wheel bolt 3f.

As described above, by setting the thickness Ha of the wheel mounting flange 3b forming the tap hole 3e to 1.02 times or more the nominal diameter R of the wheel bolt 3f, an axial force of the wheel bolt 3f can be sufficiently exerted, and the wheel WH and the brake rotor BR can be fixed. Furthermore, by setting the thickness Ha of the wheel mounting flange 3b forming the tap hole 3e to less than 1.3 times the nominal diameter R of the wheel bolt 3f, the tap hole 3e can be formed without increasing the thickness of the wheel mounting flange 3b itself, and an axial dimension of the bearing device for a vehicle wheel 1 can be prevented from increasing.

Furthermore, a relationship between the vehicle body mounting flange 2e of the outer ring 2 and an outer side portion 2h located on the outer side of the vehicle body mounting flange 2e will be described. As illustrated in FIG. 3, the outer side portion 2h is a cylindrical portion provided on the outer side of the vehicle body mounting flange 2e, and is a portion that stores the outer side ball row 6 therein.

The outer side portion 2h is continuous with the vehicle body mounting flange 2e, and an outer diameter r of the outer side portion 2h decreases toward the outer side. An outer diameter ra of the outer side portion 2h at an intersection 2ha between a straight line passing through the groove bottom 2da of the outer raceway surface 2d and extending in the radial direction and an outer peripheral surface of the outer side portion 2h is formed to be smaller than an outer diameter of an inner side end portion of the vehicle body mounting flange 2e.

With such a configuration, it is possible to prevent the outer diameter of the outer ring 2 from increasing in the radial direction and the size of the bearing device for a vehicle wheel 1 in the radial direction from enlarging.

Furthermore, a radial length between the groove bottom of the outer raceway surface on the outer side and the outer peripheral surface of the outer side portion 2h of the outer ring 2 is denoted by d1. The radial length d1 is preferably 3.6 mm or more and less than 6 mm.

In a case where the radial length d1 is less than 3.6 mm, a heat-treated cured layer provided from a surface of the outer raceway surface 2d to an outer diameter side reaches the outer peripheral surface of the outer ring 2, and hot cracking may occur. Furthermore, in a case where the radial length d1 is 6 mm or more, the thickness itself of the outer ring 2 increases, which causes an increase in the weight and size of the bearing device for a vehicle wheel 1. Therefore, a radial length between the ball 7 on the outer side and the groove bottom 2da of the outer raceway surface 2d, and the outer peripheral surface of the outer side portion 2h of the outer ring 2 is defined as d1. By setting the radial length d1 to 3.6 mm or more and less than 6 mm, it is possible to reduce the size of the bearing device for a vehicle wheel 1, and secure a predetermined thickness of an untreated layer that has not been subjected to heat treatment curing from the outer diameter of the outer ring 2, so that hot cracking can be prevented.

### [Method of mounting wheel to bearing device for wheel]

When the brake rotor BR and the wheel WH are mounted to the wheel mounting flange 3b of the bearing device for a vehicle wheel 1, the holes provided in the brake rotor BR and the wheel WH are aligned with the tap hole 3e in the radial direction, and the wheel bolt 3f is inserted from the outer side toward the inner side. A fastening force is generated by screwing a male screw portion of the wheel bolt 3f and a female screw portion of the tap hole 3e, and the brake rotor BR and the wheel WH are fixed to the wheel mounting flange 3b.

Furthermore, in a case where the screw thread of the wheel bolt 3f is crushed and the fastening force is reduced, the wheel bolt 3f can be easily removed by pulling out the wheel bolt 3f toward the outer side of the wheel WH. This facilitates replacement of the wheel bolt 3f. Furthermore, since the wheel bolt 3f can be removed from the outer side by a tool, it is easy to remove the wheel WH and perform maintenance of the inside. Therefore, maintainability is improved.

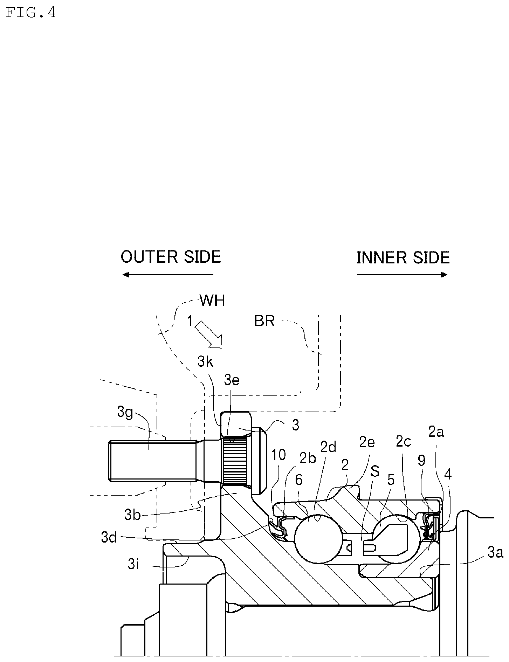

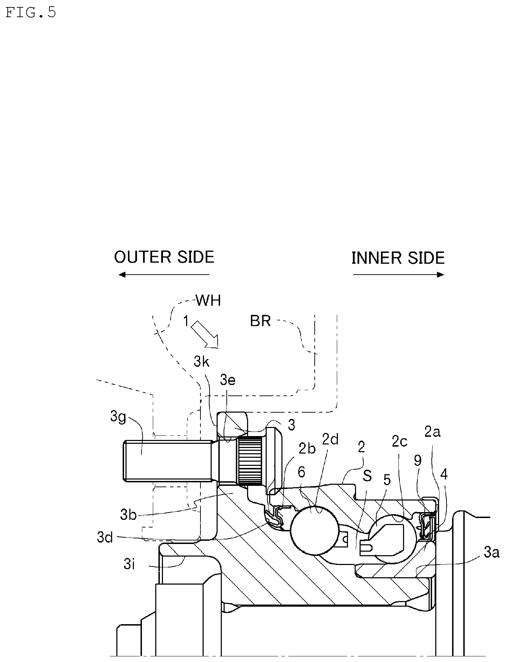

For example, as illustrated in FIG. 4, in a conventional method of press-fitting and fixing a hub bolt 3g into a bolt hole provided in the wheel mounting flange 3b, a head portion of the hub bolt 3g is located on the inner side of the wheel mounting flange 3b. As illustrated in FIG. 5, in a case where the pitch circle diameter PCDo of the outer side ball row 6 is increased, the head portion of the hub bolt 3g comes into contact with and interferes with the outer peripheral surface of the outer side opening portion 2b of the outer ring 2. This sometimes places a limit on increasing the pitch circle diameter PCDo of the outer side ball row 6.

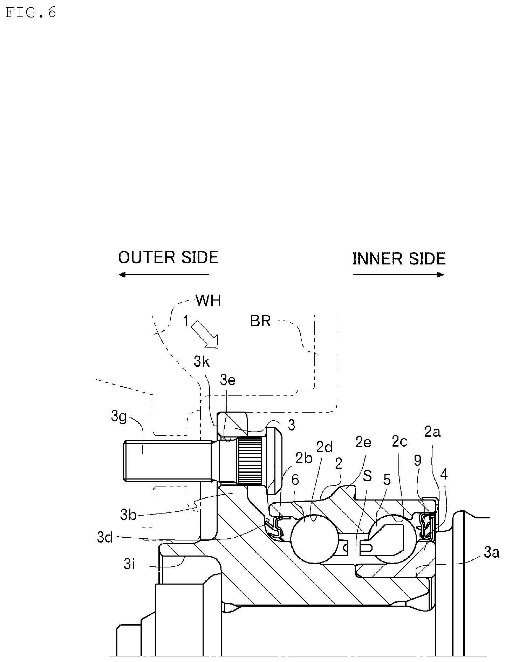

Furthermore, as illustrated in FIG. 6, in a case where the pitch circle diameter PCDi of the balls 7 constituting the inner side ball row 5 and the pitch circle diameter PCDo of the balls 7 constituting the outer side ball row 6 are configured to have the same diameter, the head portion of the hub bolt 3g does not abut against the outer peripheral surface of the outer side opening portion 2b of the outer ring 2, but it is difficult to improve the camber rigidity.

Therefore, as illustrated in FIGS. 1 and 3, by providing the tap hole 3e in the wheel mounting flange 3b and inserting the wheel bolt 3f from the outer side toward the inner side, the head portion of the wheel bolt 3f is located on the outer side of the wheel mounting flange 3b. With such a configuration, the head portion of the wheel bolt 3f does not abut against the outer peripheral surface of the outer side opening portion 2b of the outer ring 2, and the pitch circle diameter PCDo of the outer side ball row 6 can be formed to be larger than the pitch circle diameter PCDi of the inner side ball row 5.

As described above, the bearing device for a vehicle wheel 1 according to the present invention includes: the outer ring 2 including the outer raceway surface 2d formed on the outer side and the outer raceway surface 2c formed on the inner side with respect to the outer raceway surface 2d; the inner member including the hub ring 3 that includes the wheel mounting flange 3b for mounting the wheel WH on the outer side with respect to the outer ring 2 and in which the inner raceway surface 3c facing the outer raceway surface 2d is formed, and the inner ring 4 that is fitted to the hub ring 3 on the inner side with respect to the inner raceway surface 3c and in which the inner raceway surface 4a facing the outer raceway surface 2c is formed; the outer side ball row 6 rollably accommodated between the outer raceway surface 2d and the inner raceway surface 3c; and the inner side ball row 5 rollably accommodated between the outer raceway surface 2c and the inner raceway surface 4a. The wheel mounting flange 3b includes a tap hole 3e into which a wheel bolt 3f is inserted from the outer side. A pitch circle diameter of the outer side ball row 6 is larger than a pitch circle diameter of the inner side ball row 5. A thickness Ha of the wheel mounting flange 3b forming the tap hole 3e is 1.02 times or more and less than 1.3 times a nominal diameter R of the wheel bolt 3f to be inserted.

With such a configuration, by forming the pitch circle diameter PCDo of the outer side ball row 6 to be larger than the pitch circle diameter PCDi of the inner side ball row 5, the driving stability of the vehicle is improved by increasing the camber rigidity while reducing the torque and the weight as the environmental performance.

Furthermore, the tap hole 3e can be formed without increasing the thickness of the wheel mounting flange 3b itself, and an axial dimension of the bearing device for a vehicle wheel 1 can be prevented from increasing.

Furthermore, the outer ring 2 includes the vehicle body mounting flange 2e for mounting the outer ring 2 to the vehicle body side member, and the outer side portion 2h located on the outer side of the vehicle body mounting flange 2e. The outer diameter ra of the outer side portion 2h at the intersection 2ha between the straight line passing through the groove bottom 2da of the outer raceway surface 2d and extending in the radial direction and the outer peripheral surface of the outer side portion 2h is smaller than an outer diameter of the inner side end portion of the vehicle body mounting flange 2e.
With such a configuration, it is possible to prevent the outer diameter of the outer ring 2 from increasing in the radial direction and the size of the bearing device for a vehicle wheel 1 in the radial direction from enlarging.

Furthermore, the radial length d1 between the groove bottom 2da of the outer raceway surface 2d and the outer peripheral surface of the outer side portion 2h of the outer ring 2 is preferably 3.6 mm or more and less than 6 mm.
With this configuration, it is possible to reduce the size of the bearing device for a vehicle wheel 1, and secure a predetermined thickness of the untreated layer that has not been subjected to heat treatment curing from the outer diameter of the outer ring 2, so that hot cracking can be prevented.

Although the embodiment of the present invention has been described above, the present invention is not limited to such an embodiment in any way, and the embodiment is merely an example, and it is needless to say that the present invention can be implemented in further various forms without departing from the gist of the present invention. The scope of the present invention is indicated by the recitation of the claims, and further includes the meaning equivalent to the recitation of the claims and all changes within the scope of the claims.

### Reference Signs List

- 1: bearing device for a vehicle wheel

- 2: outer ring
- 2c: outer raceway surface (on an inner side)
- 2d: outer raceway surface (on an outer side)
- 3: hub ring
- 3a: small diameter step portion
- 3b: wheel mounting flange
- 3c: inner raceway surface
- 3e: tap hole
- 3f: wheel bolt
- 4: inner ring
- 4a: inner raceway surface
- 4b: inner side end surface
- 5: inner side ball row
- 6: outer side ball row
- 7: ball
- PCDi: pitch circle diameter (of balls in the inner side ball row)
- PCDo: pitch circle diameter (of balls in the outer side ball row)

## Claims

1. A bearing device for a vehicle wheel (1), the bearing device comprising:
an outer member (2) including a first outer raceway surface (2d) formed on one side in an axial direction and a second outer raceway surface (2c) formed on another side in the axial direction with respect to the first outer raceway surface (2d);
an inner member (3, 4) including a hub ring (3) including a wheel mounting flange (3b) located on the one side in the axial direction with respect to the outer member (2) and an outer peripheral surface (3j) extending in the axial direction, and at least one inner ring (4) press-fitted into the outer peripheral surface (3j) of the hub ring (3), the inner member (3, 4) including a first inner raceway surface (3c) and a second inner raceway surface (4a) respectively facing the first outer raceway surface (2d) and the second outer raceway surface (2c) of the outer member (2);
a first rolling element (6) rollably accommodated between the first outer raceway surface (2d) and the first inner raceway surface (3c); and
a second rolling element (5) rollably accommodated between the second outer raceway surface (2c) and the second inner raceway surface (4a),
**characterized in that** the wheel mounting flange (3b) includes a tap hole (3e) into which a bolt (3f) is inserted from the one side in the axial direction,
a pitch circle diameter of the first rolling element (6) is larger than a pitch circle diameter of the second rolling element (5), and
a thickness (Ha) of the wheel mounting flange (3b) forming the tap hole (3e) is 1.02 times or more and less than 1.3 times a nominal diameter (R) of the bolt (3f) to be inserted.

2. The bearing device for a vehicle wheel (1) according to claim 1, **characterized in that**
the outer member (2) includes a vehicle body mounting flange (2e) for mounting the outer member (2) to a vehicle body side member, and one side portion (2h) in the axial direction located on one side in the axial direction of the vehicle body mounting flange (2e), and
an outer diameter (ra) of the one side portion (2h) in the axial direction at an intersection (2ha) between a straight line passing through a groove bottom (2da) of the first outer raceway surface (2d) and extending in a radial direction and an outer peripheral surface of the one side portion (2h) in the axial direction is smaller than an outer diameter of the vehicle body mounting flange (2e).

3. The bearing device for a vehicle wheel (1) according to claim 1, **characterized in that**
a radial length (d1) between a groove bottom (2da) of the first outer raceway surface (2d) of the outer member (2) and an outer peripheral surface of one side portion (2h) in the axial direction of the outer member (2) is 3.6 mm or more and less than 6 mm.
